# EUROPEAN PATENT APPLICATION

(11) **EP 4 678 528 A1**
(43) Date of publication of application: **14.01.2026**
(21) Application number: 24715872.8
(22) Date of filing: 07.03.2024
(51) Int. Cl.: B63B 1/10, B63B 35/44, B63B 1/12

(54) **FLOATING PLATFORM**

(30) Priority: 07.03.2023 ES 202330189
(71) Applicant: GAZELLE WIND POWER LIMITED, D04 TR29 Dublin (IE)
(72) Inventor: GARCÍA FERRÁNDEZ,, Antonio, 28224 Madrid (ES)
(74) Representative: Abel & Imray LLP
(86) International application number: PCT/IB2024/052197
(87) International publication number: WO 2024/184838

(57) **Abstract**

A floating platform (1) comprising a pedestal frame (100) configured to serve as a support for a structure, wherein the pedestal frame (100) is attached to a bottom plate (200) by means of a plurality of pillars (300) such that, in operating condition, the pedestal frame (100) is supported by the bottom plate (200) by means of the pillars (300), wherein the floating platform (1) comprises a plurality of immersion floats (400) projecting from the bottom plate (200) to an intermediate distance between the bottom plate (200) and the maximum height above the bottom plate (200) of the pillars (300). **It** also includes a geometry that allows the platform to be manufactured exclusively with flat panels.

## Description

### Object of the invention

The present invention is a floating platform, which is especially suitable to serve as a base for wind turbines located at sea.

The floating platform, purpose of the present invention enables increasing the stability with respect to other floating platforms of the state of the art, both the dynamic stability in towing the floating platform from a port to its final location in an offshore wind farm and from said location to a port. The anchoring stability at the location in the offshore wind farm is also increased, reducing the influence of the waves on the platform, thanks to the change of geometry of the floating surface when it is not yet installed and therefore has a lower draft.

The floating platform, object of the present invention can be applied in any type of structure intended to be located floating on the surface of the sea, especially those intended to serve as a support for offshore wind turbines.

### Background of the invention and technical problem to be solved

Floating platforms, especially those dedicated to supporting wind turbines for offshore wind power generation, are usually built on land and transported by ships being towed (pulled) from the port to their final location in an offshore wind farm. Once in their final location, cables that are part of an anchoring system are connected to the platforms. These exert a force with a vertical component that increases their apparent weight and therefore their draft, wherein the cables are usually attached to anchors or bottom weights that rest on the seabed.

At the end of a floating platform's useful life, or when it is necessary to repair and/or replace any of the parts that are part of the floating platform, it is necessary to unhook the mooring cables from the floating platform, and tow the floating platform back to port.

During the towing of the floating platform, stability is a key factor, since the operating condition requires that the platform has little stability and when releasing the mooring cables, the presence of waves can cause the floating platform to sway uncontrollably and even possibly to capsize, especially in the case of floating platforms on which a high wind turbine tower is mounted.

Also, at its final location, it is desirable that a floating platform be as "transparent" (or immune) as possible to waves, to avoid excessive swaying or danger of capsizing. To ensure the stability of the floating platform in its final location, the anchoring system is configured with adequate tension in the anchoring cables (usually by means of counterweights) to minimise the possible pitching or rolling movements of the floating platform in swell situations.

However, the geometry and draft of the current floating platforms makes it very difficult to control and reduce the pitching and rolling movement of the floating platform, both in its towing phase to its final location, as well as in the final location itself in an anchoring situation.

Likewise, in its final location, in the case of floating platforms that serve as a base for wind turbines, it is sometimes necessary to interrupt the operation of the wind turbine and arrange its blades with a minimum of wind resistance, in order to reduce the overturning moment (bending moment) that the wind exerts, through the tower of the wind turbine, on the floating platform, so that this overturning movement does not add to the force of the waves on the platform and can cause the platform to overturn, basically it is a matter of turning off the turbine to improve the survival of the platform.

### Disclosure of the invention

In order to remedy the aforementioned drawbacks, the present invention relates to a floating platform.

The floating platform, subject of the present invention comprises a pedestal frame configured to serve as a support for a structure (e.g., a wind turbine).

The pedestal frame is attached to a bottom plate by means of a plurality of pillars such that, in use (in operating condition), the pedestal frame is supported by the bottom plate by means of the pillars.

In a novel manner, the floating platform, object of the present invention, comprises a plurality of immersion floats projecting from the bottom plate (e.g., perpendicular to the bottom plate) up to a distance located between the bottom plate and the maximum height above the bottom plate of the pillars.

These immersion floats provide a stability to the floating platform that favours, during the towing manoeuvres of the floating platform between the port and the final location in the offshore wind farm, the floating platform is very little affected by wind and waves, with an increase in stability due to the fact that the immersion floats come out of the water and act as stabilizing elements.

Also, by having a reduced height (lower than the height of the pedestal frame), when the floating platform is connected to the anchoring system (by means of anchoring cables), increasing the apparent weight of the floating platform and raising the water level (the waterline) with respect to the floating platform, the immersion floats are hidden under the waterline, making the floating platform quite immune or transparent to waves in the final location, since it offers very little surface of opposition to the waves. As the immersion floats are fully submerged, the waves pass over the floats without causing the floating platform to sway or pitch in a way that could compromise the stability of the floating platform.

The bottom plate is located as low as possible (away from the sea surface) and is therefore hardly affected by waves.

Preferably the cross section of the bottom plate is polygonal, and more preferably rectangular. Also, preferably, the cross section of the bottom plate is wider than it is high. This helps make the bottom plate more transparent to waves (offers less resistance to wave motion).

With its eminently flat geometry, the bottom plate offers much resistance to the vertical movements of the floating platform, thus helping to slow down and/or reduce vertical accelerations and, therefore, improving the stability of the floating platform.

Preferably, the pillars are hollow, thus serving as floats. In this way, the floating platform has enormous buoyancy, which gives it great stability both when under tow and at the final location.

The bottom plate can be hollow. This feature provides additional buoyancy to the floating platform and thus additional stability.

Preferably, the floating platform comprises a plurality of supports (or support parts) configured for the attachment of articulated arms (or of a bottom system with pulleys, as disclosed in Spanish patent P201500839) for the connection of the floating platform with mooring cables. This feature makes the floating platform, object of the present invention, suitable for use with articulated arms (or swing arms) such as those described in Spanish Patent application P202230449.

Thus, although in some of the Figures of the present patent application the floating platform is represented in combination with articulated arms (or swinging arms), the floating platform, object of the present invention, can be used without said articulated arms, replacing them by pulleys (although they are not represented in the Figures).

These supports (or support parts) for the articulated arms are preferably located in correspondence with the immersion floats (on said immersion floats).

According to a first embodiment of the floating platform, object of the present invention, the pillars comprise a straight section with polygonal geometry, and are arranged in pairs, wherein each pair of pillars comprises "V" shaped geometry, wherein the end of the pillars of each pair corresponding to the vertex of the "V" is located corresponding to the pedestal frame, and wherein the end of the pillars of each pair opposite to the vertex of the "V" is located corresponding to the bottom plate. This feature provides, on the one hand (thanks to the straight section with polygonal geometry) that the pillars are easier to manufacture, which in turn allows these pillars to be manufactured in one shipyard and assembled in another (which is beneficial in case repairs or assemblies need to be carried out on site). On the other hand, the V-shaped geometry of the pillars, combined with the bottom plate, creates a truss geometry with triangular structures, which give the floating platform extreme rigidity.

Preferably, in the first embodiment of the floating platform, the pillars comprise a straight section with rectangular geometry.

Also, preferably, in this first embodiment of the floating platform, the pedestal frame comprises a star-shaped geometry with a plurality of arms, wherein each arm of the pedestal frame extends from the centre of the floating platform to the apex of a pair of pillars.

According to a second embodiment of the floating platform, the pillars comprise a cylindrical geometry. This geometry, although more difficult to manufacture, provides more buoyancy volume and allows the creation of a space inside the pillars, facilitating access to the platform and improving the safety of maintenance personnel accessing the platform through access points that may be located corresponding to these cylindrical pillars.

Preferably, according to this second embodiment of the floating platform, the pedestal frame comprises a star-shaped geometry with a plurality of arms, wherein each arm of the pedestal frame extends from the centre of the floating platform to a pillar.

Also, preferably, according to this second embodiment, the floating platform comprises a plurality of frame walkways, wherein each frame walkway extends from the end of a pillar (located corresponding to the end of an arm of the pedestal frame), to a cross piece of one of the supports (or support parts) of the articulated arms.

**In** any of the embodiments of the floating platform, the bottom plate may comprise a closed curved geometry, for example, a circular geometry.

Preferably, the bottom plate comprises a geometry with a polygonal plan.

Thus, the bottom plate may comprise a triangular geometry. **In** this case, the immersion floats may be located corresponding to the vertices of the triangular geometry of the bottom plate.

**In** the case where the bottom plate has a triangular geometry (with triangular plan), the projection on the bottom plate of the end of each arm of the cover pedestal located corresponding to each pillar, is preferably located corresponding to the midpoint of each side of the bottom plate.

Alternatively, the bottom plate may comprise a regular hexagonal geometry (with a plan with regular hexagon-shaped geometry).

This regular hexagon-shaped bottom plate geometry is suitable for larger floating platforms intended to support larger structures, as it provides greater stability and limits the overall size of the platform.

Alternatively, the bottom plate may comprise an irregular hexagonal geometry (with a plan with irregular hexagon-shaped geometry of equal sides, but different angles).

This irregular hexagon-shaped bottom plate geometry is suitable for floating platforms of intermediate size (between the one with triangular bottom plate and the one with regular hexagonal bottom plate), intended to support structures larger than those supported by the platforms with a triangular bottom plate, but not as large as the structures that the floating platform whose bottom plate has regular hexagonal geometry is capable of supporting.

Both in floating platforms whose bottom plate has geometry with a regular hexagonal plan and in floating platforms whose bottom plate has geometry with an irregular hexagonal plan, the immersion floats are preferably located corresponding to alternate vertices of the hexagonal geometry of the bottom plate.

**In** these cases, and when the pedestal frame has a star-shaped geometry, the projection on the bottom plate of the end of each arm of the pedestal frame located corresponding to each pillar, is located corresponding to a vertex of the hexagonal geometry of the bottom plate.

Preferably, the floating platform comprises means for deploying and retracting at least one cable connecting it to a central counterweight. This allows the central counterweight to be shifted vertically during transport operations using a strand jack winch housed inside the tower base.

**In** the floating platform, object of the present invention, due to the ratio between the volumes of the bottom plate and that of the pillars (the plate has approximately 80% of the total volume of the hull), when the counterweight and the tensions of the mooring cables are eliminated, the floating platform rises until the roof of the bottom plate comes out of the water, greatly increasing its stability. This occurs only in port (the counterweight is present in navigation), but in port it greatly facilitates the assembly and construction operations of the platform.

An important difference with respect to other floating platforms in the state of the art is that in most of such floating platforms, each element has only one function, i.e., it is a hydrodynamic or structural element, but not both; in fact, when they need to dampen a movement, flat plates are attached (suitably reinforced), but they have no volume. Contrary to this, in the floating platform object of the present invention, the bottom plate simultaneously fulfils three functionalities: it is structural (to give rigidity to the structure), provides buoyancy and also provides cushioning to the vertical movement.

According to a third embodiment of the floating platform, object of the present invention, the floating platform comprises a plurality of supports configured for the coupling of articulated arms for the connection of the floating platform with mooring cables, wherein the floating platform comprises a plurality of structural arms, and each support is connected, by means of a corresponding structural arm, to the apex of the "V" of an adjacent pair of pillars.

This feature distributes the tension of the mooring cables between the support and the structural arm, which lightens the structural elements of the floating platform and achieves a more effective load distribution.

These structural arms also generate new buoyancy chambers that increase the platform's buoyancy.

All this (weight reduction, lightening of the structural elements and generation of new buoyancy chambers thanks to the structural arms that are hollow) greatly increase the platform's buoyancy as well as its stability.

Preferably, according to this third embodiment of the floating platform, each structural arm is arranged coplanar with the corresponding adjacent pair of pillars. This feature improves the load transmission from each of the supports of each articulated arm, through each structural arm, to each pair of V-shaped pillars, which allows the structural elements of the platform to be designed with a slimmer geometry, making them lighter.

Preferably each support comprises a first end connected to the corresponding structural arm and a second end connected to an immersion float.

Each articulated arm is supported on a cross piece, and each end of the cross piece is supported on a corresponding first end of a support.

According to a first variant of the third embodiment of the floating platform, each structural arm comprises a geometry with narrowing in the centre.

According to a second variant of the third embodiment of the floating platform, each structural arm comprises a prismatic geometry with parallel sides two by two.

### Brief description of the figures

As part of the explanation of at least one embodiment of the invention, the following figures have been included.
Figure 1: shows a schematic perspective view of a first embodiment of the floating platform, object of the present invention.
Figure 2: shows a perspective of a variant of the floating platform of Figure 1, in which the connections between the pedestal frame and the pillars are not welded, but are joined by pins.
Figure 3: shows a schematic perspective exploded view of the floating platform of Figure 1.
Figure 4: shows a perspective view of the floating platform of Figure 1, where a wind turbine tower mounted on the floating platform can be observed. Although not depicted, there is a wind turbine on the tower.
Figure 5: shows a perspective view of the floating platform of Figure 1, showing the articulated arms for connection to the mooring cables.
Figure 6: shows a schematic perspective view of a second embodiment of the floating platform object of the present invention, according to a first variant in which the bottom plate has triangular geometry.
Figure 7: shows a schematic perspective view of the floating platform of Figure 6, showing a wind turbine mounted on the floating platform.
Figure 8 shows a plan view of the floating platform in figure 6.
Figure 9: shows a schematic perspective view of the floating platform of Figure 6, showing the articulated arms for connection to the mooring cables.
Figure 10: shows a schematic perspective view of a floating platform, according to a second variant of the second embodiment of the present invention, wherein the bottom plate has a hexagonal geometry.
Figure 11: shows a schematic perspective view of the floating platform of Figure 10, showing a wind turbine mounted on the floating platform.
Figure 12 shows a plan view of the floating platform in figure 10.
Figure 13: shows a schematic perspective view of the floating platform of Figure 10, showing the articulated arms for connection to the mooring cables. It also includes diagonal braces that stiffen the structure of the floating platform.
Figure 14: shows a schematic perspective view of a floating platform, according to a third variant of the second embodiment of the present invention, wherein the bottom plate has an irregular hexagon geometry with equal sides.
Figure 15: shows a schematic perspective view of the floating platform of Figure 14, showing a wind turbine mounted on the floating platform.
Figure 16 shows a plan view of the floating platform in figure 14.
Figure 17: shows a schematic perspective view of the floating platform of Figure 14, showing the articulated arms for connection to the mooring cables.
Figure 18: shows a schematic plan view of the floating platform of Figure 14, where the approach areas for vessels carrying maintenance personnel have been highlighted.
Figure 19: shows a first perspective view of a first variant of a third embodiment of the floating platform.
Figure 20: shows a second perspective view of the floating platform of Figure 19.
Figure 21 shows an exploded view of the floating platform in figure 19.
Figure 22: shows a first perspective view of a second variant of the third embodiment of the floating platform.
Figure 23: shows a second perspective view of the floating platform of Figure 22.
Figure 24 shows an exploded view of the floating platform in figure 22.

### Detailed Description

The present invention relates, as mentioned above, to a floating platform (1).

The floating platform (1) comprises a pedestal frame (100) and a bottom plate (200), wherein the pedestal frame (100) is configured for attachment of a structure, such as a tower (2) of a wind turbine.

The pedestal frame (100) is connected to the bottom plate (200) by a plurality of pillars (300) such that, in use, the bottom plate (200) is located below the pedestal frame (100) and the pedestal frame (100) is held or supported by the bottom plate (200) by means of the pillars (300).

Preferably, the pillars (300) are hollow, thus serving as floats for the floating platform (1).

The floating platform (1) comprises a plurality of immersion floats (400). The immersion floats (400) project from the bottom plate (200) and have a height lower than the height of the pillars (300), so that the maximum height of the immersion floats (400), measured from the bottom plate (200), is below the height of the pedestal frame (100), also measured from the bottom plate (200).

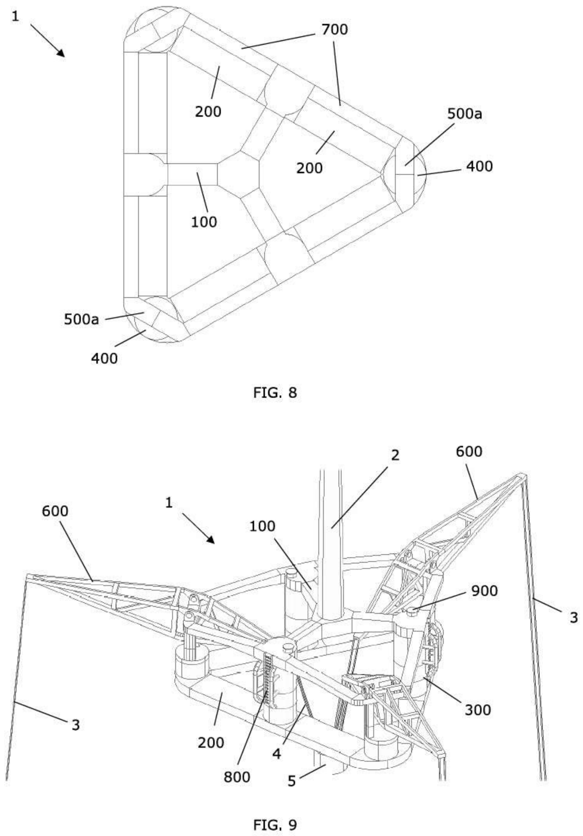

Thus, the immersion floats (400) are configured to produce buoyancy of the floating platform (1) such that, during towing manoeuvres of the floating platform (1), when the floating platform (1) is not connected to the mooring cables (to the bottom cables (3) and to the central cables (4) connecting the floating platform (1) to the central counterweight (5), as can be seen, for example, in Figure 9, the immersion floats (400) produce excess buoyancy, so that the immersion floats (400) cut the waterline of the floating platform (1).

When the floating platform (1) is connected to the mooring cables, the effective weight of the floating platform (1) increases, submerging the immersion floats (400) below the waterline of the floating platform (1).

Preferably, the maximum height of the immersion floats (400) above the bottom plate (200) is less than half the maximum height above the bottom plate (200) of the pillars (300).

The floating platform (1) preferably comprises supports (500) which may be configured for coupling and/or hooking articulated arms (600) to which the anchoring cables of the anchoring system of the floating platform (1) are connected. The floating platform also comprises bottom cables (3), which connect the floating platform (1) to anchors or bottom weights (not shown), and the central cables (4) which connect the floating platform (1) to a central counterweight (5)).

The pedestal frame (100) may comprise, corresponding to the centre of said pedestal frame (100), a means for deploying and retracting at least one cable connected to the central counterweight (5). This feature is not shown in the figures. By these means of deployment and retraction of the at least one connecting cable to the central counterweight (5), the vertical position of the central counterweight (5) can be changed using a winch (strand jack) located inside the pedestal frame (100) (just below the tower (2)). When the central counterweight (5) is lowered, it significantly improves the stability of the floating platform (1) (and thus its safety) during the journey between the port and the wind farm. When the depth of the seabed is not great enough, the central counterweight (5) can be raised (to prevent it from scraping the bottom) by using that winch, in order to have the maximum stability compatible with the depth of the seabed.

Preferably, the pedestal frame (100) comprises a star-shaped geometry.

Also, preferably, the bottom plate (200) is not solid, but comprises a hollow cross-section, thus also acting as a float, providing buoyancy to the floating platform (1). This float (bottom plate (200)) is very submerged so it is little affected by waves.

According to a first embodiment of the floating platform (1), the pillars (300) comprise a cross-section with polygonal geometry, for example rectangular. Also, preferably, in this first embodiment of the floating platform (1), the pillars (300) are arranged in pairs, wherein each pair of pillars (300) are arranged in a "V" shape, with the apex of the "V" connected to the pedestal frame (100) (inverted "V" shape).

The immersion floats (400) are arranged alternately on the bottom plate (200), alternating between each pair of pillars (300) in an inverted "V" shape.

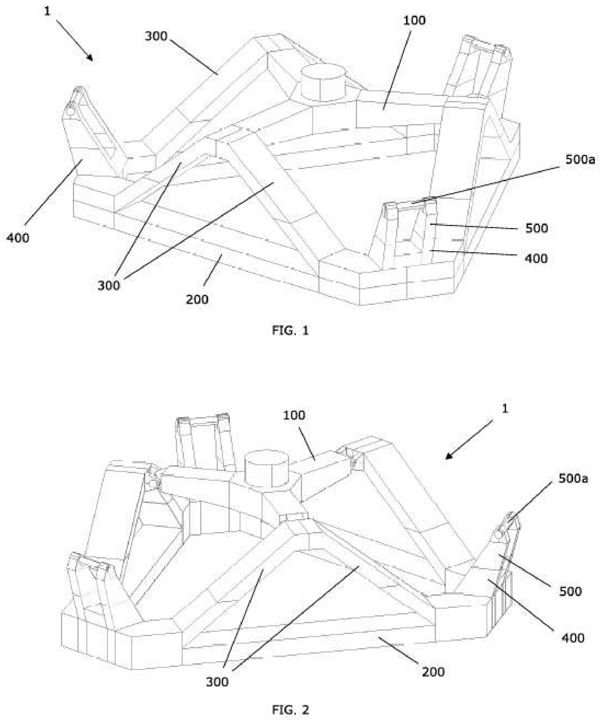

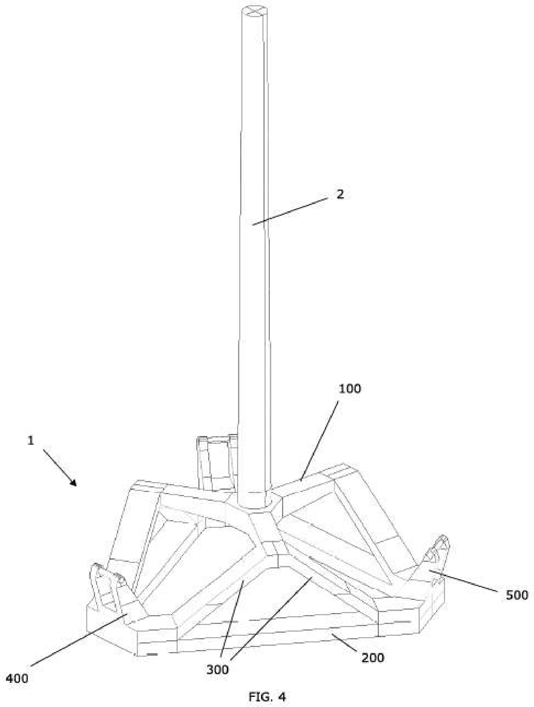

Figures 1, 2, 3, 4 and 5 show schematically the first embodiment of the floating platform (1), according to a variant wherein the bottom plate (200) has a triangular plan geometry (with chamfered vertices), and the pedestal frame (100) has a geometry in the form of a three-pointed star (or arms), one point on each side of the bottom plate (200), wherein each tip or arm of the pedestal frame (100) connects the centre of the pedestal frame (100) (on which the tower (2) of the wind turbine sits) with the vertex of a pair of pillars (300), and wherein the projection of said vertex of the pair of pillars (300) on the bottom plate (200) is located corresponding to the centre of each side of the bottom plate (200).

From each end or tip of the pedestal frame (100), a pair of pillars (300) extends in the form of an inverted "V", the apex of the "V" being located corresponding to the end or tip of the pedestal frame (100) and the pillars (300) of the pair extending away from each other, until connecting with the bottom plate (200) in proximity to the immersion floats (400).

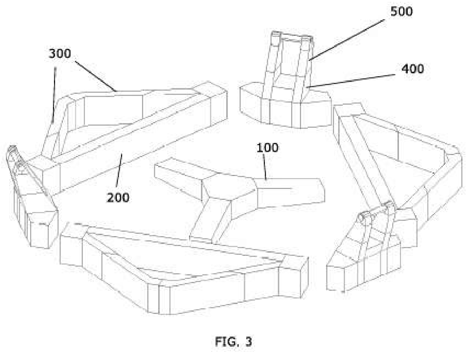

This first embodiment makes it possible to manufacture pillars with a polygonal cross-section (preferably rectangular), which are easier to manufacture than cylindrical pillars. In addition, the V-shaped geometry of the pillars generates floating platforms with triangular-shaped parts (see Figure 3) that provide enormous rigidity to the floating platform.

In this first embodiment of the floating platform (1), the immersion floats (400) have a geometry with a polygonal cross-section, preferably rectangular, and are fork-shaped or "U" shaped, configured to support the supports (500) of the articulated arms (600), wherein said supports (500) have an inverted "U" shaped geometry formed by two parallel support plates and a transverse piece (500a) in the form of a transverse axis or perpendicular to the support plates, which serves as a pivot axis for the articulated arms (600).

There are other possible variants (not shown in the Figures) of the first embodiment of the floating platform (1), wherein the bottom plate (200) comprises a geometry with a polygonal plan other than a triangle (for example, with a regular hexagonal or irregular hexagonal plan), and wherein the pedestal frame (100) may comprise a star-shaped geometry, with a number of points equal to or other than three.

According to a second embodiment of the floating platform (1), the pillars (300) have a cylindrical-shaped geometry. Preferably, in this second embodiment of the floating platform (1), the immersion floats (400) also have a cylindrical-shaped geometry.

Pillars (300) connect each end or tip of the pedestal frame (100) to the bottom plate (200). In this second embodiment, there is a single pillar (300), cylindrical, connecting each end of the cover pedestal (100) to the bottom plate (200).

In this second embodiment of the floating platform (1), the support (500) of the articulated arms (600) has an inverted "U" shaped geometry formed by two parallel support plates or columns and a transverse piece (500a) in the form of a transverse plate or perpendicular to the support plates or columns, which serves as a support for bearings for some pivot shafts for the articulated arms (600).

In this second embodiment, the floating platform (1) comprises a plurality of frame walkways (700) connecting each end of the pillars (300) located corresponding to the pedestal frame (100), with the cross pieces (500a) of the supports (500) of the articulated arms (600).

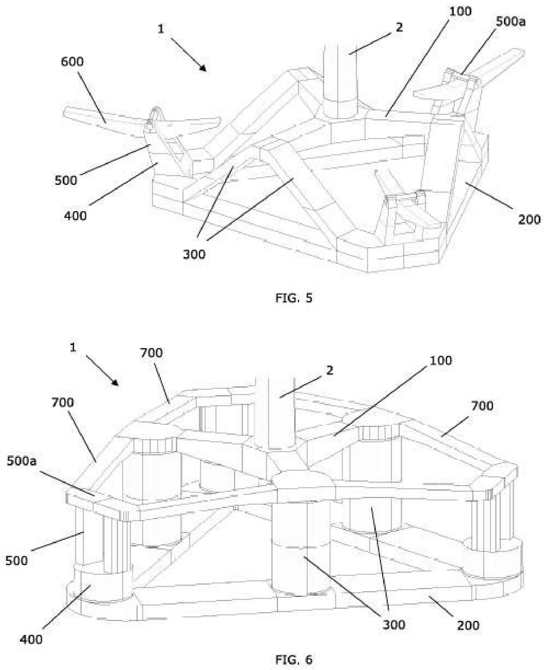

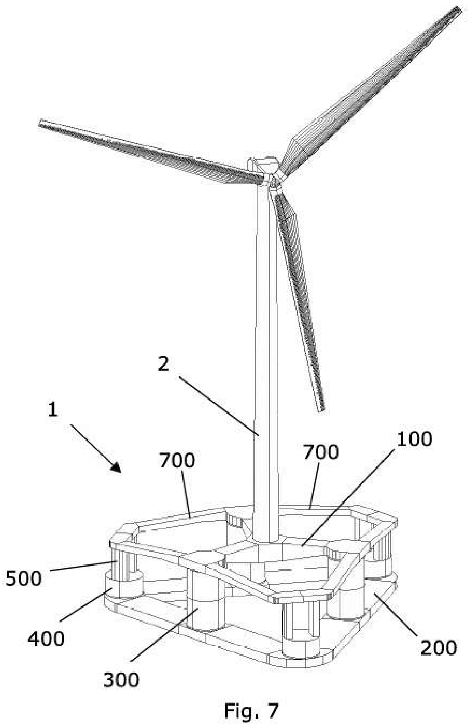

Figures 6, 7, 8 and 9 show a first variant of this second embodiment of the floating platform (1), wherein the bottom plate (200) has a triangular plan geometry (with chamfered vertices) and the pedestal frame (100) has a three-pointed star-shaped geometry.

As shown in Figure 9, the floating platform (1) comprises at least one access point, for example in the form of a ladder (800) located on the pillars (300), combined with hatches (900) located over each end of the pillars (300) located in correspondence with the pedestal frame (100).

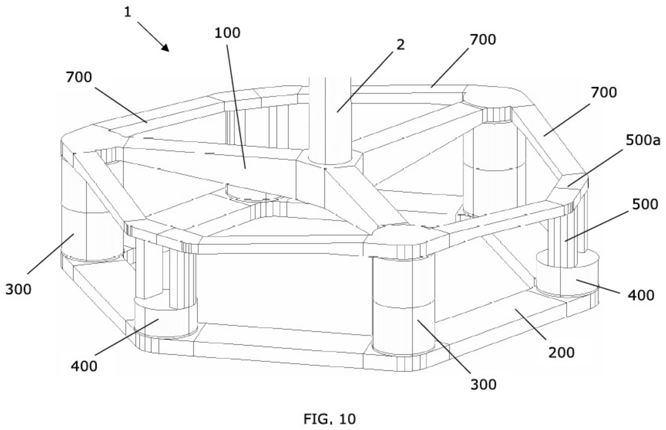

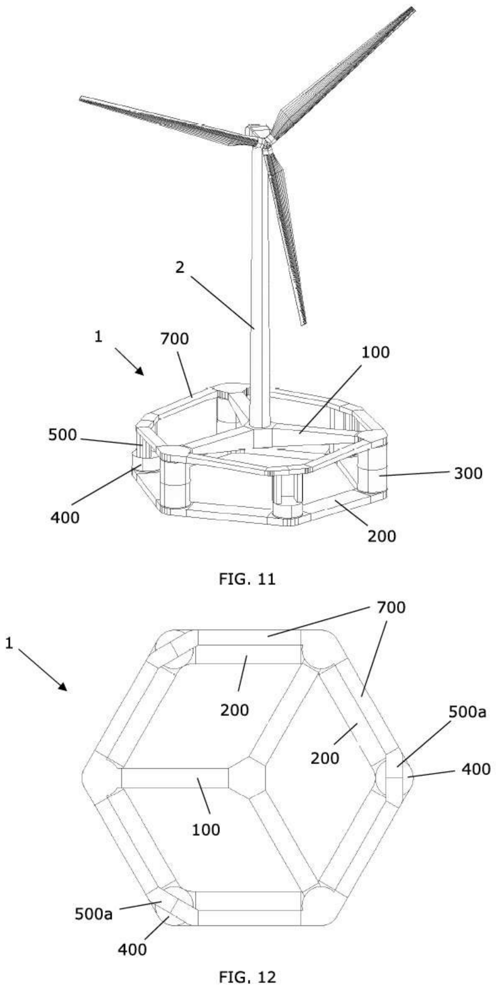

Figures 10, 11, 12 and 13 show a second variant of the second embodiment of the floating platform (1), wherein the bottom plate (200) has a regular hexagonal plan geometry (with rounded vertices) and the pedestal frame (100) has a three-pointed star-shaped geometry (or arms), wherein each tip or arm of the pedestal frame (100) connects the centre of the pedestal frame (100) (on which the tower (2) of the wind turbine sits) with one end of a pillar (300), and wherein the pillars (300) are arranged to the alternate vertices of the regular hexagonal geometry of the bottom plate (200).

The immersion floats (400) are also located underneath the alternate vertices of the regular hexagonal geometry of the bottom plate (200), the pillars (300) and the immersion floats (400) alternating at the vertices of the regular hexagonal geometry of the bottom plate (200).

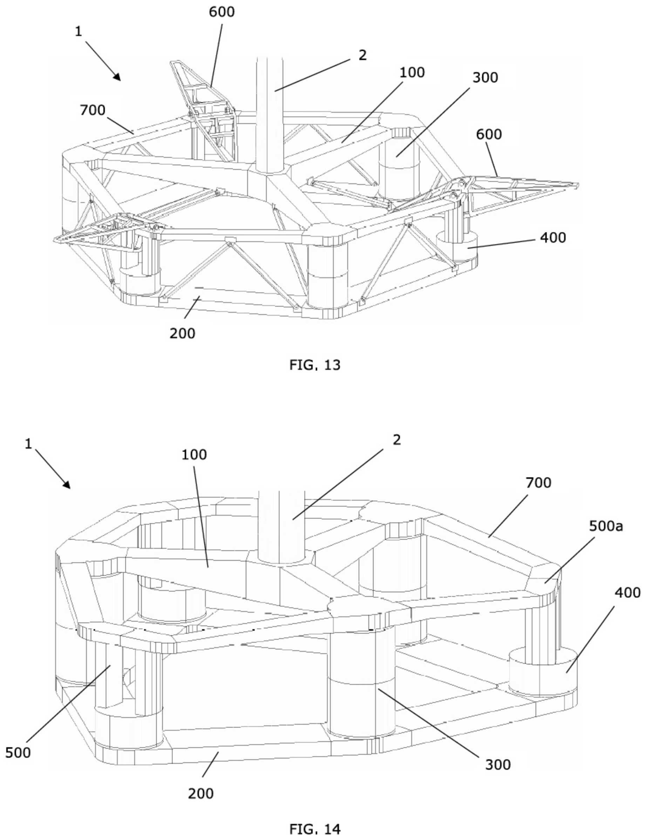

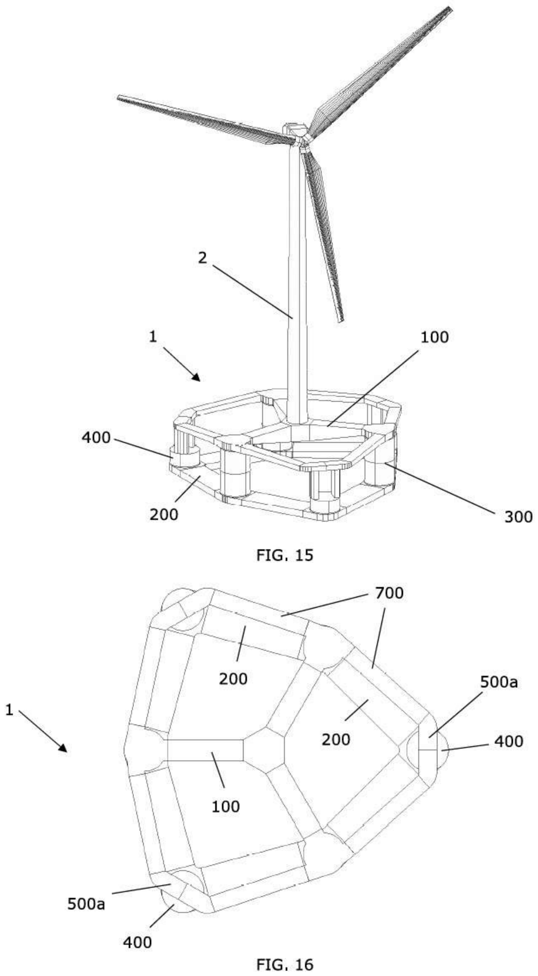

Figures 14, 15, 16, 17 and 18 show a third variant of the second embodiment of the floating platform (1), wherein the bottom plate (200) has a geometry with an irregular hexagonal plan (with rounded vertices). This irregular hexagonal geometry resembles a triangular geometry (as in the first variant of the second embodiment), wherein the midpoints of the sides of the bottom plate (200) would have been shifted slightly away from the centre or central axis of the floating platform (1).

In this third variant of the second embodiment of the floating platform (1), the pedestal frame (100) has a three-pointed star-shaped geometry (or arms), wherein each tip or arm of the pedestal frame (100) connects the centre of the pedestal frame (100) (on which the tower (2) of the wind turbine sits) with one end of a pillar (300), and wherein the pillars (300) are arranged in correspondence with alternating vertices of the irregular hexagonal geometry of the bottom plate (200).

The immersion floats (400) are also located underneath the alternate vertices of the irregular hexagonal geometry of the bottom plate (200), the pillars (300) and the immersion floats (400) alternating at the vertices of the irregular hexagonal geometry of the bottom plate (200).

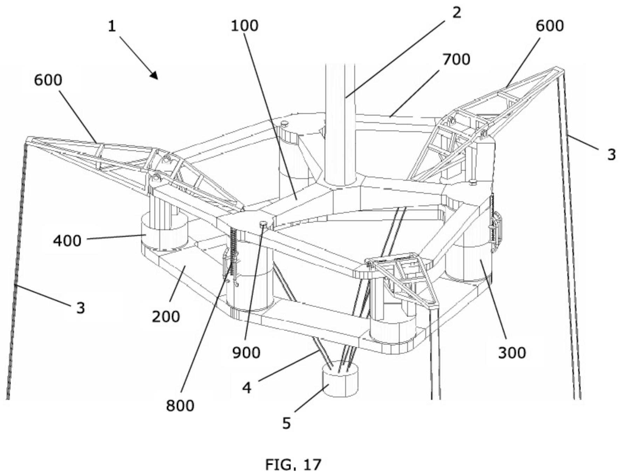

As shown in Figure 17, the floating platform (1) comprises at least one access point, for example in the form of a ladder (800) located on the pillars (300), combined with hatches (900) located over each end of the pillars (300) located corresponding to the pedestal frame (100).

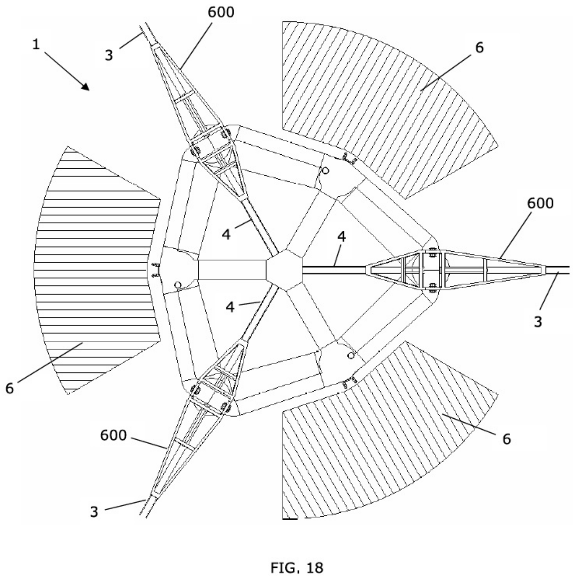

Figure 18 shows a plan view of a floating platform (1), according to the third variant of the second embodiment. **In** this Figure 18, the approach areas (6) provided for vessels carrying maintenance personnel have been depicted by means of the striped areas, so that such maintenance personnel can access the floating platform at the provided access points in a safe manner. In these approach zones (6), it is ensured that the vessels are sufficiently far away from the articulated arms (600), thus avoiding that in case of possible waves, the swinging movement of the articulated arms (600) does not cause damage to the vessel and the maintenance personnel.

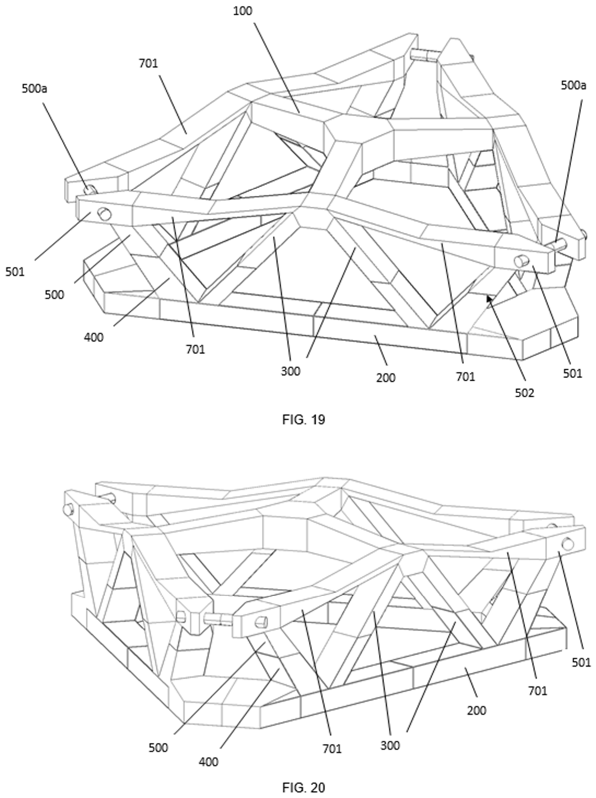

According to a third embodiment of the invention, shown in Figures 19, 20, 21, 22, 23 and 24, the pedestal frame (100) of the floating platform (1) has a star-shaped geometry with a plurality of tips (or arms) wherein each tip or arm of the pedestal frame (100) connects the centre of the pedestal frame (100) (on which the tower (2) of the wind turbine sits) with the vertex of a pair of pillars (300), and wherein the projection of said vertex of the pair of pillars (300) on the bottom plate (200) is located on the centre of each side of the bottom plate (200).

Figures 19, 20, 21, 22, 23 and 24 show variants of this third embodiment wherein the bottom plate (200) has a triangular geometry (with chamfered vertices) and the pedestal frame (100) comprises a three-pointed star-shaped geometry (or arms), one point on each side of the bottom plate (200).

From each end or tip of the pedestal frame (100), a pair of pillars (300) extends in the form of an inverted "V", the apex of the "V" being located corresponding to the end or tip of the pedestal frame (100) and the pillars (300) of the pair extending away from each other, until connecting with the bottom plate (200) in proximity to the immersion floats (400).

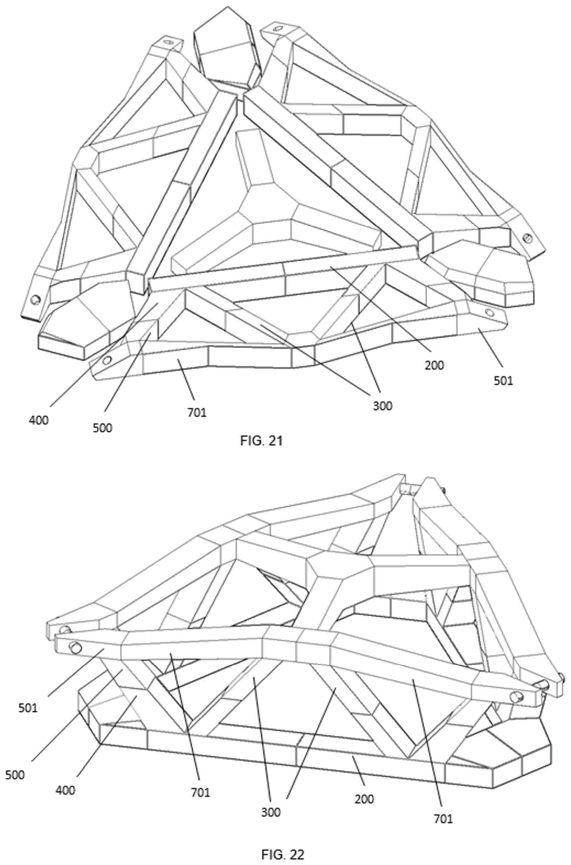

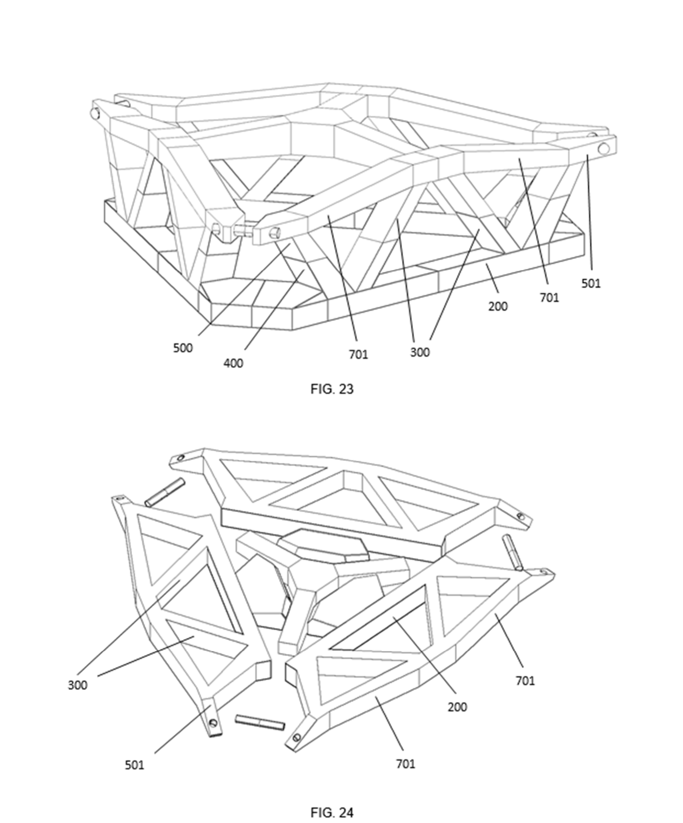

Analogous to the first embodiment, this third embodiment also makes it possible to manufacture pillars with a polygonal cross-section (preferably rectangular), which are easier to manufacture than cylindrical pillars. In addition, the V-shaped geometry of the columns generates floating platforms with truss-shaped parts (see Figures 21 and 24) that provide extreme rigidity to the floating platform.

According to the third embodiment of the floating platform (1), each immersion float (400) serves as a support for a corresponding support (500) of an articulated arm (600).

Each articulated arm (600) is configured to rest on a cross piece (500a), and each end of this cross piece (500a) in turn rests on a corresponding support (500) supported on an immersion float (400).

Thus, a first end (501) of each support (500) connects said support (500) with the cross piece (500a) which serves as a support for the corresponding articulated arm (600). A second end (502) of each support (500) connects each support (500) to a corresponding immersion float (400).

**In** this third embodiment, from each vertex of the "V" of each pair of pillars (300) (located in correspondence with an end or tip of the pedestal frame (100)) two structural arms (701) extend, wherein each structural arm (701) connects the vertex of the pair of pillars (300) with "V" shaped geometry with the first end (501) of a support (500) supported on an immersion float (400) adjacent to the pair of pillars (300).

In this third embodiment of the floating platform (1), the assembly formed by each support (500), the immersion float (400) on which said support (500) rests and the structural arm (701) connecting the first end (501) of said support (500) with the vertex of the "V" of the adjacent pair of pillars (300) is arranged coplanar with said adjacent pair of pillars (300) in the form of a "V".

Thus, in this third embodiment of the floating platform (1), each articulated arm (600) is supported on the corresponding cross piece (500a), which in turn is supported on a pair of supports (500), each of which is connected by means of a respective structural arm (701) to the vertex of the "V" of a respective pair of pillars (300).

By means of the configuration described for this third embodiment of the floating platform (1), it is possible to transmit the tension of each mooring cable (connected to each articulated arm (600)), through the corresponding articulated arm (600) and the corresponding cross piece (500a), to the two structural arms (701), and from there to the pair of pillars (300).

Thus, in this third embodiment, it is possible to relieve the working stresses of the supports (500) with respect to the floating platform (1) according to the first embodiment, by distributing the load (which, in the first embodiment, was borne by each support (500)) between the support (500) and the structural arm (701), which in turn allows lightening of the structure, and enabling the use of more slender geometries for all the components of the structure of the floating platform (1), and being able to dispense with some of the reinforcement plates that are usually used to ensure the correct assembly of the different structural elements.

In Figures 19, 20 and 21, a first variant of the third embodiment is shown, wherein each structural arm (701) comprises a geometry with a tapering at an intermediate span of the structural arm (701).

Figures 19 and 20 show perspective views of this first variant of the third embodiment.

In Figures 22, 23 and 24, a second variant of the third embodiment is shown, according to which each structural arm (701) comprises a prismatic geometry with two-by-two parallel sides.

Figures 22 and 23 show perspective views of this second variant of the third embodiment.

Figures 21 and 24 show respective exploded perspective views of the different structural elements of the floating platform (1) (according to the first variant and the second variant of the third embodiment), where it can be seen that each pair of pillars (300) in a "V" shape is made in the same truss piece (1000) together with two structural arms (701), each of which is connected to a corresponding support (500) and each support (500) is connected to an immersion float (400).

The pair of pillars (300) in a "V" shape is arranged, in each truss part (1000), according to the same plane together with the structural arms (701), the supports (500) and the immersion floats (400), which facilitates manufacturing the truss parts (1000) and optimises the distribution of loads and/or stresses when the floating platform (1) is in use.

The V-shaped geometry of the columns and the geometry of the truss parts (1000) generate floating platforms (1) with extreme rigidity and load-bearing capacity at reduced weight.

In addition to the structural function of the structural arms (701), these structural arms (701) also allow access (by walkways) for the maintenance personnel of the floating platform (1), from the pedestal frame (100) to the first end (501) of the supports (500), to carry out monitoring and/or maintenance work on the articulated arms (600).

There are possible variants (not shown in the Figures) of the third embodiment of the floating platform (1), wherein the bottom plate (200) comprises a geometry with a polygonal plan other than a triangle (for example, with a regular hexagonal or irregular hexagonal plan), and wherein the pedestal frame (100) may comprise a star-shaped geometry, with a number of points equal to or other than three.

## Claims

1. Floating platform (1) comprising a pedestal frame (100) configured to serve as a support for a structure, wherein the pedestal frame (100) is attached to a bottom plate (200) by means of a plurality of pillars (300) such that, in an operating condition, the pedestal frame (100) is supported by the bottom plate (200) by means of the pillars (300), wherein the floating platform (1) is **characterized in that** it comprises a plurality of immersion floats (400) projecting from the bottom plate (200) to a distance located between the bottom plate (200) and the maximum height above the bottom plate (200) of the pillars (300), wherein the pillars (300) comprise a straight section with polygonal geometry, and are arranged in pairs, wherein each pair of pillars (300) comprises a "V" shaped geometry, wherein the end of the pillars (300) of each pair corresponding to the apex of the "V" is located in correspondence with the pedestal frame (100), and wherein the end of the pillars (300) of each pair opposite to the apex of the "V" is located on the bottom plate (200).

2. Floating platform (1) as claimed in claim 1, **characterized in that** the pillars (300) are hollow.

3. Floating platform (1) as claimed in claim 1 or 2, **characterized in that** the bottom plate (200) is hollow.

4. Floating platform (1) as claimed in any of the preceding claims, **characterized in that** it comprises a plurality of supports (500) configured for coupling articulated arms (600) for connecting the floating platform (1) with mooring cables.

5. Floating platform (1) as claimed in claim 4, **characterized in that** the supports (500) are located attached to the immersion floats (400).

6. Floating platform (1) as claimed in claim 1, **characterized in that** the pillars (300) comprise a straight section with rectangular geometry.

7. Floating platform (1) as claimed in claim 1 or 6, **characterized in that** the pedestal frame (100) comprises a star-shaped geometry with a plurality of arms, wherein each arm of the pedestal frame (100) extends from the centre of the floating platform (1) to the apex of a pair of pillars (300).

8. Floating platform (1) according to any of the preceding claims, **characterized in that** the bottom plate (200) comprises a triangular geometry.

9. Floating platform (1) according to any one of claims 1 to 7, **characterized in that** the bottom plate (200) comprises a regular hexagonal geometry.

10. Floating platform (1) according to any one of claims 1 to 7, **characterized in that** the bottom plate (200) comprises an irregular hexagonal geometry.

11. Floating platform (1) as claimed in claim 4 or 5, **characterized in that** it comprises a plurality of structural arms (701), wherein each support (500) is connected, by means of a corresponding structural arm (701), to the apex of the "V" of an adjacent pair of pillars (300).

12. Floating platform (1) as claimed in claim 11, **characterized in that** each structural arm (701) is arranged coplanar with the corresponding adjacent pair of pillars (300).

13. Floating platform (1) as claimed in claim 11 or 12, **characterized in that** each support (500) comprises a first end (501) connected to the corresponding structural arm (701) and a second end (502) connected to an immersion float (400).

14. Floating platform (1) according to any one of claims 11 to 13, **characterized in that** each structural arm (701) comprises a geometry with a tapering at the centre.

15. Floating platform (1) according to any one of claims 11 to 13, **characterized in that** each structural arm (701) comprises a prismatic geometry with parallel sides two by two.
